# EUROPEAN PATENT SPECIFICATION

(11) **EP 2 470 414 B1**
(45) Date of publication and mention of the grant of the patent: **06.11.2013**
(21) Application number: 10771355.4
(22) Date of filing: 24.08.2010
(51) Int. Cl.: B62D 55/084, B62D 55/116

(54) **SUSPENDED TRACKED VEHICLE**
RAUPENFAHRZEUG MIT AUFHÄNGUNG
VÉHICULE À CHENILLES SUSPENDU

(30) Priority: 24.08.2009 DK 200900951
(43) Date of publication of application: 04.07.2012
(73) Proprietor: Lynex APS, 8240 Risskov (DK)
(72) Inventor: HANSEN, Jens, DK-8240 Risskov (DK)
(74) Representative: Inspicos A/S
(86) International application number: PCT/EP2010/062313
(87) International publication number: WO 2011/023684

(56) References cited:
- US-A- 3 521 527
- US-A- 4 166 511

## Description

### FIELD OF THE INVENTION

The present invention relates to a tracked vehicle comprising a chassis and at least two track assemblies and its suspension assemblies.

### BACKGROUND

Tracked vehicles come in many embodiments and are typically tracked due to the environment in which they are to operate. Such an environment is often characterized by uneven terrain, loose ground, extremely high or low surrounding temperatures. Tracked vehicles are therefore e.g. used for military purposes, mining, building industry and forestry. In these environments or settings the tracked vehicles are known for their robustness and great maneuverability. Suspended tracked vehicles are not common, but they can be found on relatively light tracked vehicles. Here the suspension serves to ensure that the tracked vehicle does not tilt, when e.g. one of the tracks bumps into an obstacle such as a stone of e.g. the same size as the height of the tracks.

Tracked vehicles are known where the rear part of the tracks are turnably mounted to the chassis of the vehicle such that the tracks can be turned around an axis perpendicular to the driving direction of the vehicle. However, the rear end of the vehicle is not suspended. The fronts of the tracks are interconnected by an arm, which center is rotably mounted to the front of the chassis. This means that when the front of a first track is moved up, the front end of the second track moves down. Thus, the entire second track and the rear part of the first track remain in contact with the ground. Hereby it is to a certain extent avoided that the tracked vehicle tilts. However, the disadvantage of this type of suspension is that the rear end of the tracks will be subjected to twist, wrench or torsion as the interconnecting arm causes the front of the tracks to move up and down in a curved manner. The undesired torsional forces created by this can eventually lead to fatigue in the construction and breakage of the vehicle.

US 4,166,511 describes one such crawler vehicle riding on spaced apart crawler track assemblies extending in the lengthwise direction of the vehicle.

Whether the tracks are suspended as described above or not, the tracked vehicles share the same conditions, namely that the all bumps and jolts are transferred directly to the chassis and the vehicle as such. In order to overcome all the stresses, the tracked vehicles are therefore designed to be very robust whereby tracked vehicles normally have a high tare weight.

### DESCRIPTION OF THE INVENTION

The present invention relates to a tracked vehicle comprising a chassis and at least two track assemblies, where each track assembly is suspended to the chassis by at least two suspension assemblies. Each suspension assembly comprises at least two connection arms and at least one adjustable actuator. One end of each connection arm is mounted turnably to the chassis and the other end is mounted turnably to one of the track assemblies. The at least one adjustable actuator comprises one end mounted turnably to the chassis and the other end mounted turnably to the one track assembly, such that the height of the one track assembly relative to the chassis can be adjusted by adjusting the length of the adjustable actuator.

According to another aspect, the present invention further relates to a tracked vehicle comprising a chassis and at least two track assemblies, where each track assembly is suspended to the chassis by a first suspension assembly and a second suspension assembly. The first suspension assembly comprises at least one connection arm, where one end of said connection arm is mounted turnably to the chassis and the other end is mounted turnably to one of the track assemblies. The second suspension assembly comprises at least two connection arms, where one end of each connection arm is mounted turnably to the chassis and the other end is mounted turnably to the one track assembly, and at least one adjustable actuator having one end mounted turnably to the chassis and the other end mounted turnably to the one track assembly, such that the height of the one track assembly relative to the chassis can be adjusted at both the first and the second suspension assembly by adjusting the length of the adjustable actuator.

The suspension of the tracked vehicle of the present invention according to the above provides many degrees of freedom in positioning and suspending the tracks and the track end relative to each other and relative to the chassis. This greatly increases the functionality of the vehicle since the height and position of the tracks relative to the chassis can be adjusted individually by adjusting the length of the adjustable actuators. The height and position may be adjusted individually at each suspension assembly position. Hereby the gauge and angle of attack or tilting of the tracks can be adjusted. Further, the adjustable actuator helps to suspend the whole vehicle such that all bumps and jolts that occur during the operation of the tracked vehicle are reduced or eliminated. Due to the connection arms and the adjustable actuator, the suspended track may be moved up or down relative to the chassis without any simultaneous tilting of the track. Further, the construction of the suspension assembly allows for a track to be tilted relative to the chassis or the other suspension location without significantly changing its height relative to the chassis. Alternatively or additionally, a suspended track may be both tilted and lifted or lowered relative to the chassis.

Hereby is obtained a tracked vehicle which is capable of adapting its ground clearance or clearance height during operation thereby being able to adapt to the properties of the ground over which the vehicle is moving. As an example, the chassis of the vehicle may be generally lifted when moving over a very uneven terrain or a terrain with obstacles such as larger stones etc. Similarly, one side of the chassis may be lifted or lowered e.g. to accommodate for a tilting terrain for instance to maintain an essentially horizontal position of the chassis as such. The adjustment possibilities due to the suspension assemblies of the distance between the tracks or the track gauge are further advantageous in reducing the risk of the vehicle to hang on the underside of the chassis. Further, the height and position adjustment of the tracks help to ensure as low a center of gravity of the vehicle as possible under all conditions, which is advantageously and of outermost importance e.g. in operating the vehicle on slopes or in generally reducing the risk of tilting or overturning the vehicle. Further, the possibility to tilt the tracks relative to the chassis may on some terrain be used to ensure a maximal engagement and contact surface of the tracks to the ground.

According to an embodiment, at least one of the track assemblies comprises a track beam and at least two track support members positioned a fixed distance apart on the beam. The track support members are connected to the suspension assemblies suspending the track assembly. Hereby is obtained that the track may be tightened and prestressed an appropriate amount at all times independently of the suspension assemblies and of the position of the suspended track relative to the chassis. As opposed to for instance the suspension systems of cars, the suspension locations on each track are advantageously maintained at a fixed absolute distance apart at all times regardless of the setting or position of the suspension assemblies, in order to either keep and uphold the tightening of each track and/or to avoid or reduce the stresses and strains in the track assemblies. This is obtained by the suspension system according to the above.

In an embodiment of the tracked vehicle, the connection arms of a suspension assembly are mounted essentially parallel to each other at a mutual distance. Hereby is obtained that the track at the location of the suspension may be moved up or down relative to the chassis without tilting at the same time. In an embodiment of the tracked vehicle the connection arms of a suspension assembly are mounted essentially non-parallel to each other. Hereby is obtained a connection mechanism where a change or adjustment of the track height relative to the chassis simultaneously involves a controllable amount of tilting of the track relative to the chassis.

According to an embodiment of the invention, the actuators of the suspension assemblies may be individually adjustable, thereby allowing for individual position adjustment of the track assemblies relative to the chassis at the suspension locations of the track. Hereby the flexibility and maneuverability of the vehicle may be greatly improved. Further, the individual adjustment possibilities may reduce the stresses and loads in the vehicles suspension and in the track assemblies.

According to an embodiment of the invention, the at least two connection arms of at least one of the suspension assemblies are mounted such that the one end of the first connection arm is mounted to the chassis at a first chassis position, and the one end of the second connection arm is mounted to the chassis at a second chassis position closer to the ground, and such that the other end of the first connection arm is mounted to the track assembly at a first track position, and the other end of the second connection arm is mounted to the track assembly at a second track position closer to the ground. Hereby the connection arms are mounted below each other. Hereby may be obtained a more controlled up and downwards movement of the track relative to the chassis by the adjustment of the actuator.

In an embodiment of the tracked vehicle each end of each of the connection arms, and the adjustable actuator of at least one of the suspension assemblies comprise a rod end. By a rod end is here and in the following to be understood an end connection permitting a rotational movement of the end, such that the element may be pivotally secured. The rod end may for instance comprise a rod end bearing, a heim or a rose joint, a spherical bearing, or a ball joint. The use of rod ends reduces or eliminates the undesired and destructive stresses caused by the wrenches, twist and torsion that will occur when adjusting the tracks. This significantly increases the durability of the tracked vehicle.

In yet another embodiment of the tracked vehicle the at least one of the connection arms of at least one of the suspension assemblies comprises a bar. Here the tracks can be adjusted at a fixed distance to the chassis of the vehicle.

In another embodiment of the tracked vehicle the at least one of said connection arms of at least one of the suspension assemblies comprises a length adjusting element such as an actuator, a hydraulic cylinder, or a pneumatic cylinder, such that the angle of the one tracks assembly relative to the chassis can be adjusted by adjusting the length of the connection arm. Hereby the tracks can be adjusted both up and down, but also away and towards the chassis of the vehicle. Further, the angle of the tracks relative to horizontal can be adjusted. This means that the tracked vehicle can be driven with one track on a sloping surface and one track on a horizontal surface. It also means that the tracked vehicle can be driven with a negative gauge.

At least one of the track assemblies may in a further embodiment be further connected to the chassis by at least one torsion bar, where one end of the torsion bar is mounted to the chassis and the other end of the torsion bar is mounted to the track assembly, such that tension and compression forces can be transferred between the chassis and the track assembly at least partly in the vehicles direction of movement. The torsion bar may act to reduce the loads on the suspension assemblies by absorbing the stresses occurring when driving the tracked vehicle. The torsion bar may in this way especially help to transfer the loads from the track assembly to the chassis, reducing the torsion otherwise prone to occur in one or more of the suspension assemblies especially at acceleration or braking of the track and at changes of the track movement.

In yet another embodiment of the tracked vehicle, the at least one torsion bar mounted to one of the track assemblies, is mounted between the at least two suspension assemblies suspending said one track assembly. Hereby the loads transferred by the torsion bar are advantageously transferred primarily in the direction of the longitudinal direction of the vehicle and essentially from one suspended and supported location of the track assembly to essentially the other end of the vehicle at or near the other suspension location.

Each end of the torsion bar may comprise a rod end such as a rod end bearing yielding the advantages mentioned above of reducing or eliminating the undesired and destructive stresses caused by the wrenches, twist and torsion that will occur when adjusting the tracks. Furthermore, the rod end ensures that the tracks may be adjusted freely and previously described regardless of the torsion bar further connecting the track assembly to the chassis.

According to an embodiment, the at least one of the track assemblies is suspended by the at least two suspension assemblies mounted at each end or near each end of the track assembly. Hereby the track assembly may be advantageously supported and connected to the chassis, and a balance and optimal position of the center of gravity of the vehicle within the track assemblies may be ensured.

According to an embodiment, at least one of the suspension assemblies may further comprise at least one cushion. Hereby the suspension of the tracks and the chassis may be further improved.

According to an embodiment, the tracked vehicle comprises a chassis and at least two track assemblies, where each track assembly is suspended to the chassis by at least two suspension assemblies.

Each suspension assembly may comprise at least two connection arms, where one end of each said connection arm is mounted turnably to said chassis and the other end is mounted turnably to a track support.

Each suspension assembly may further comprise at least one adjustable actuator having one end mounted turnably to the chassis and the other end mounted turnably to the track support.

According to an embodiment, the at least two connection arms are mounted parallel to each other at a mutual distance.
According to an embodiment, the at least two connection arms are mounted non-parallel to each other at a mutual distance.

The ends of each connection arm and each end of said adjustable actuator may comprise a rod end. The connection arm may be a bar or a hydraulic cylinder.

According to an embodiment, each track assembly may further comprise at least one torsion bar, where one end of the torsion bar is mounted to the chassis and the other end of the torsion bar is mounted to the track support.

The at least one torsion bar may be mounted between two suspension assemblies. Each end of the torsion bar may comprise a rod end.

### BRIEF DESCRIPTION OF THE DRAWINGS

In the following, different embodiments of the invention will be described referring to the figures, where
figure 1 illustrates a tracked vehicle,
figure 2 illustrates a perspective of a track assembly and the suspension thereof,
figure 3 illustrates a perspective of a track assembly and the connection arms of the suspension,
figure 4 illustrates a rear view of a track assembly and an actuator of the suspension,
figure 5 illustrates a perspective of a track assembly and two actuators of the suspension,
figure 6 illustrates a rod end,
figure 7 illustrates a perspective of a track assembly and a torsion bar of the suspension, and
figures 8-11 illustrate different positions of the track relative to the chassis.

### DETAILED DESCRIPTION OF THE DRAWINGS

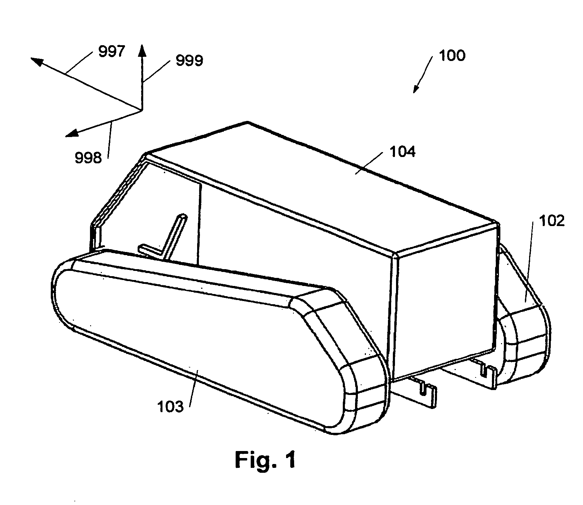

Figure 1 illustrates a tracked vehicle 100 comprising a chassis 104 and two track assemblies 102, 103, which are suspended to the chassis 104 on the right and left side of the chassis 104, respectively. The two track assemblies 102, 103 are reversed identical along the longitudinal axis 997. For the sake of simplicity only the tracked assembly 102 will therefore be described in the following.

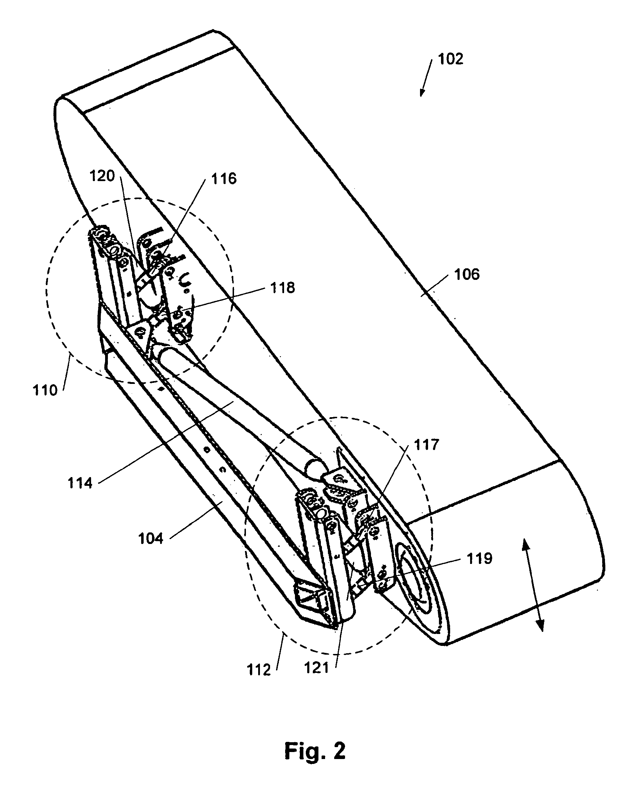

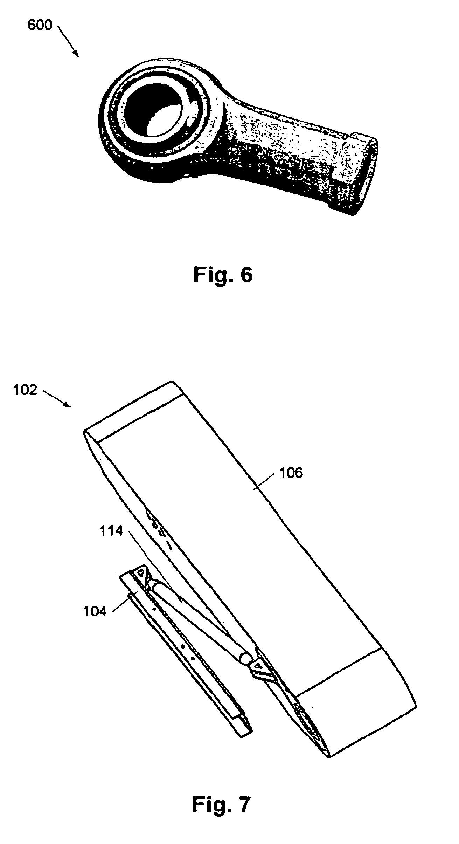

Figure 2 illustrates a perspective of the track assembly 102 and the suspension thereof. Via a transmission mechanism (not shown) the track 106 can be propelled so as to move and maneuver the tracked vehicle 100. The track assembly 102 is suspended to the chassis 104 via suspension assembly 110, 112 and a torsion bar 114 (see figure 7). Each suspension assembly 110, 112 comprises two connection arms 116, 118, and 117, 119, respectively, arranged parallel to each other at a mutual distance. In another embodiment of the suspension assembly 110, 112 the connection arms 116, 117, 118, 119 are arranged non-parallel.

Each end of the connection arms 116, 117, 118, 119 comprises a rod end. In order not to give reference to all rod ends, an example is illustrates in figure 6. All rod ends are therefore referenced 600. The rod end 600 enables the connection arms 116, 117, 118, 119 to twist a little, which will typically be caused by a rotation around the yaw axis 999 and/or pitch axis 998.

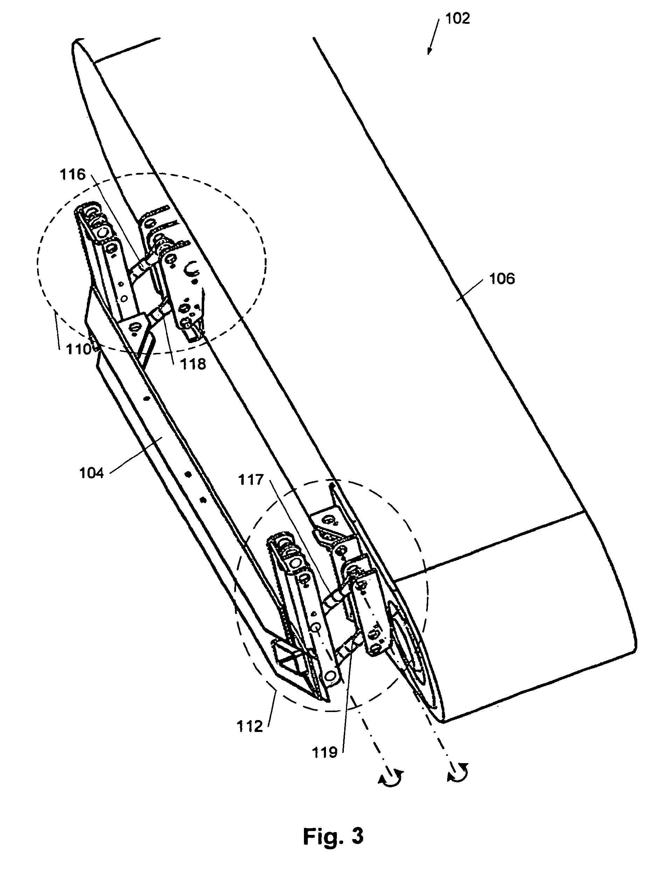

The two pairs of connection arms 116, 118, and 117, 119, respectively, and the connection sides of the track support 108 (see figure 3) and the chassis 104 essentially form an adjustable parallelogram. In the embodiment of the suspension assembly 110, 112, where the connection arms 116, 118 and 117, 119 are non-parallel, a parallelogram is not formed, however, the suspension assembly 110, 112 can still be adjusted.

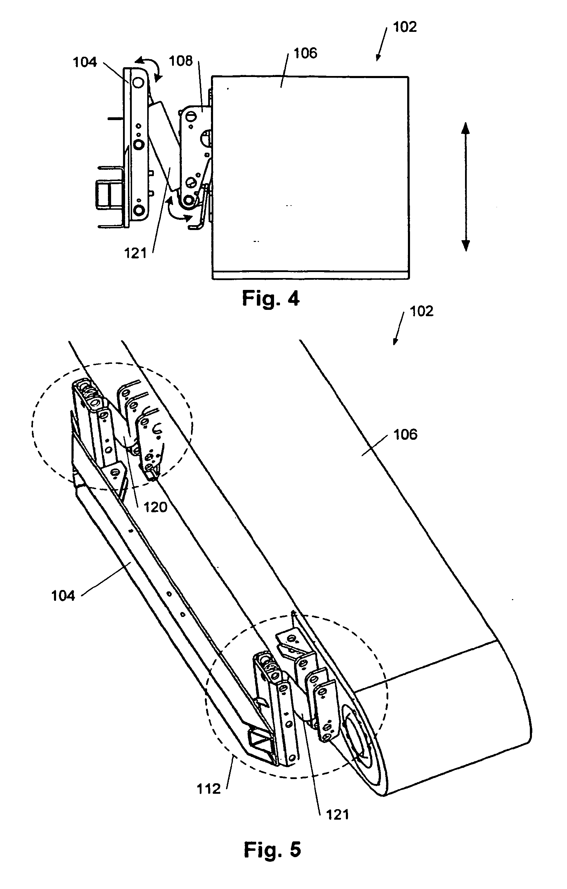

As illustrated in e.g. figures 2, 4, and 5, and 8-10, the parallelogram is adjusted by actuator 120, 121 placed diagonally in relation to the parallelogram such as between two opposite corners. In figure 4, the actuator 121 (and 120, see figure 5) extends essentially between the lower left corner of the parallelogram (on track support 108) to the upper right corner of the parallelogram (on the chassis 104). Also the ends of the actuator 120, 121 comprise a rod end 600. By adjusting the length of the actuator 120, 121, the connection arms 116, 118, 117, 119 will be turned or moved (see figure 3 where the turning or angular position of the connection arm 117 is illustrated). Hereby the position of the track assembly 102 relative to the chassis 104 can be adjusted. Since the track assembly 103 is reversed identical to the track assembly 102, this also goes for the track assembly 103. Hereby e.g. the clearance between the ground and the chassis 104 can be adjusted. As each suspension assembly 110, 112 comprises such an adjustment mechanism, these can be adjusted individually or in pairs either at the left or right side, respectively, or at the front or back, respectively. The track assembly 102, 103 can hereby be adjusted so that the tracked vehicle 100 can be driven along sloping surfaces. Such adjustment of the actuator 120, 121 can easily take place due to the degrees of freedom of the rod end 600 of the connections arms 116, 117, 118, 119 and actuator 120, 121. This means that undesired twists or wrenches in the vehicle caused by the adjustment of the actuators 120, 121 or by the driving of the vehicle 100 will not occur.

In another embodiment the actuator 120, 121 could also be a hydraulic cylinder or the like. In addition to adjusting the parallelogram, the actuator 120, 121 also serves as a suspension of the whole vehicle 100, which can e.g. dampen the effect bumps and jolts when driving.

In yet another embodiment the connections arms 116, 117, 118, 119 are e.g. actuators, hydraulic cylinders, pneumatic cylinders or any other element that can be adjusted along its longitudinal axis (not shown). In this embodiment the track assembly 102, 103 can be moved in a lateral direction 998, whereby the track gauge or width and the ground clearance can be adjusted. Further, the track assembly 102, 103 can be rotated around the roll or longitudinal axis 997. By rolling the track assembly 102, 103, the tracked vehicle 100 could e.g. have one track assembly 102, 103 adjusted to drive along the surface or ground of sloping surfaces and the other track assembly 102, 103 to drive along a horizontal surface or ground. This embodiment also enables that the tracked vehicle 100 can be driven with a negative ground clearance.

As illustrated in figure 7, a torsion bar 114 is placed between the suspension assembly 110 and the suspension assembly 112. Hence one end of the torsion bar 114 is fastened to the upper part of the track assembly 102 on the side of the suspension assembly 112 facing the suspension assembly 110. The other end of the torsion bar 114 is fastened to the lower part of the chassis 114 on the side of the suspension assembly 110 facing the suspension assembly 112. Each end of the torsion bar 114 comprises a rod end 600. The torsion bar 114 functions as a force transmitter meaning that forces leading to compressive tension and shear stresses do not cause the track's suspension assembly 110, 112 to break.

Due to the design of the suspension assembly 110, 112, the tracked vehicle is not subjected to e.g. undesired twists or wrenches. This is among other things due to the rod ends 600 of the connection arms 116, 117, 118, 119, the torsion bar 114 and the actuators 120, 121.

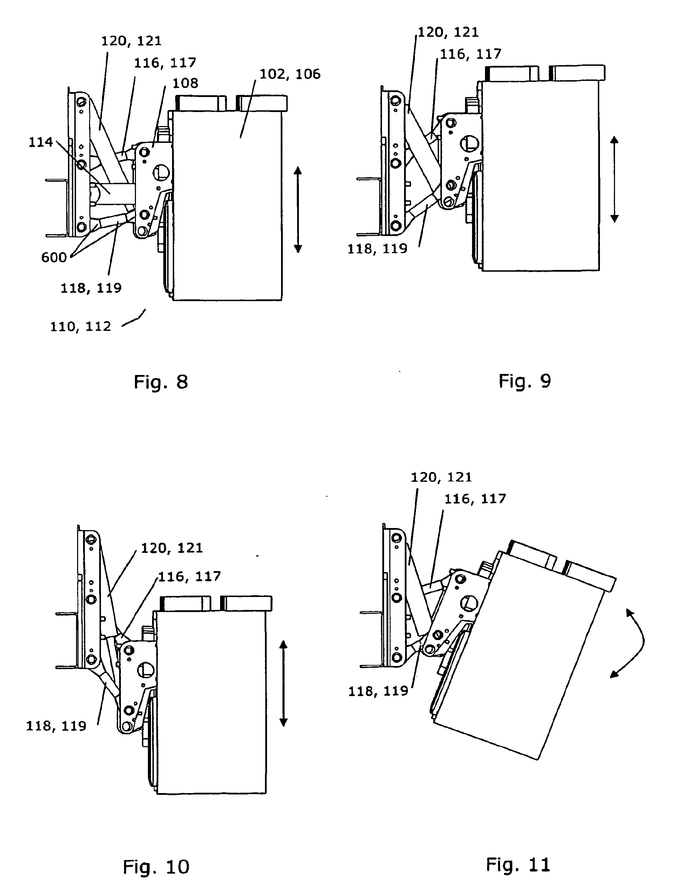

Figure 8-11 illustrate different positions of the track 106 relative to the chassis 104 obtained by adjusting the actuator 120, 121 in one of the suspension assemblies. The suspension assembly 110 (112) is depicted as seen from the rear or front end of the vehicle along the longitudinal direction of the track and the vehicle. In the figures 8-10, the connection arms 116, 118 (117, 119) are mounted below each other in an essential parallel configuration, whereby an adjustment of the actuator 120 (121) will result in a regulation or change of the height of the track relative to the chassis without tilting of the track 106.

In case the length of one or more of the connection arms 116, 118 can be adjusted for example if the connection arm comprises a hydraulic cylinder or the like, the track may also be tilted relative to the chassis in a controllable manner in addition to the height adjustment. This is illustrated in figure 11.

### REFERENCES

- 100: tracked vehicle
- 102: track assembly
- 103: track assembly
- 104: chassis
- 106: track
- 108: track support
- 110: suspension assembly
- 112: suspension assembly
- 114: torsion bar
- 116: upper connection arm of suspension assembly 110
- 117: lower connection arm of suspension assembly 112
- 118: upper connection arm of suspension assembly 110
- 119: lower connection arm of suspension assembly 112
- 120: actuator
- 121: actuator
- 600: rod end
- 997: longitudinal axis or roll axis of the tracked vehicle 100
- 998: vertical axis or yaw axis of the tracked vehicle 100
- 999: lateral axis or pitch axis of the tracked vehicle 100

## Claims

1. A tracked vehicle (100) comprising a chassis (104) and at least two track assemblies (102,103), where each said track assembly is suspended to said chassis by a first suspension assembly (110) and a second suspension assembly (112), the tracked vehicle being ***characterized by*** said first suspension assembly (110) comprising
- at least one connection arm (116,118), where one end of said connection arm is mounted turnably to said chassis (104) and the other end is mounted turnably to one of said track assemblies (102);
and said second suspension assembly (112) comprising
- at least two connection arms (117,119), where one end of each said connection arm is mounted turnably to said chassis (104) and the other end is mounted turnably to said one track assembly (102), and
- at least one adjustable actuator (121) having one end mounted turnably to said chassis (104) and the other end mounted turnably to said one track assembly(102), such that the height of said one track assembly relative to the chassis can be adjusted at both said first and said second suspension assembly by adjusting the length of the adjustable actuator.

2. A tracked vehicle (100) according to claim 1, where each suspension assembly (110,112) comprises
- at least two connection arms (116,117,118,119), where one end of each said connection arm is mounted turnably to said chassis (104) and the other end is mounted turnably to one of said track assemblies (102,103), and
- at least one adjustable actuator (120,121) having one end mounted turnably to said chassis (104) and the other end mounted turnably to said one track assembly (102,103),such that the height of said one track assembly relative to the chassis can be adjusted by adjusting the length of the adjustable actuator.

3. A tracked vehicle according to claim 1 or 2, where at least one of the track assemblies (102,103) comprises a track beam and at least two track support members (108) positioned a fixed distance apart on said beam, and where the track support members are connected to the suspension assemblies (110,112) suspending said track assembly.

4. A tracked vehicle according to any of the preceding claims, where said at least two connection arms ((116,118),(117,119)) of at least one of said suspension assemblies (110,112) are mounted essentially parallel to each other at a mutual distance.

5. A tracked vehicle according to any of the preceding claims, where said at least two connection arms ((116,118),(117,119)) of at least one of said suspension assemblies (110,112) are mounted non-parallel to each other.

6. A tracked vehicle according to any of the preceding claims, where the actuators (120,121) of the suspension assemblies (110,112) are individually adjustable.

7. A tracked vehicle according to any of the preceding claims, where the at least two connection arms ((116,118),(117,119)) of at least one of said suspension assemblies (110,112) are mounted such that the one end of the first connection arm is mounted to the chassis (104) at a first chassis position, and the one end of the second connection arm is mounted to the chassis (104) at a second chassis position closer to the ground, and such that the other end of the first connection arm is mounted to the track assembly (102,103) at a first track position, and the other end of the second connection arm is mounted to the track assembly (102,103) at a second track position closer to the ground.

8. A tracked vehicle according to any of the preceding claims, where the ends of each said connection arms (116,117,118,119) and each end of said adjustable actuator (120,121) of at least one of said suspension assemblies (110,112) comprise a rod end bearing.

9. A tracked vehicle according to any of the preceding claims, where at least one of said connection arms (116,117,118,119) of at least one of said suspension assemblies comprises a bar.

10. A tracked vehicle according to any of the preceding claims, where at least one of said connection arms (116,117,118,119) of at least one of said suspension assemblies comprises a length adjusting element such as an actuator, a hydraulic cylinder, or a pneumatic cylinder, such that the angle of said one tracks assembly relative to the chassis can be adjusted by adjusting the length of the connection arm.

11. A tracked vehicle according to any of the preceding claims, where at least one of said track assemblies (102,103) is further connected to said chassis (104) by at least one torsion bar (114), where one end of said torsion bar is mounted to said chassis and the other end of said torsion bar is mounted to said track assembly, such that tension and compression forces can be transferred between said chassis and said track assembly at least partly in the vehicles direction of movement.

12. A tracked vehicle according to claim 11, where said at least one torsion bar (114) mounted to one of said track assemblies, is mounted between the at least two suspension assemblies suspending said one track assembly.

13. A tracked vehicle according to claim 12, where each end of said torsion bar (114) comprises a rod end bearing.

14. A tracked vehicle according to any of the preceding claims, where at least one of said track assemblies is suspended by said at least two suspension assemblies mounted at each end of said track assembly.

15. A tracked vehicle according to any of the preceding claims, where at least one of the suspension assemblies further comprises at least one cushion.

## Patentansprüche

1. Raupenfahrzeug (100), das ein Fahrgestell (104) und wenigstens zwei Raupenbaugruppen (102, 103) umfasst, wobei jede Raupenbaugruppe durch eine erste Aufhängungsbaugruppe (110) und eine zweite Aufhängungsbaugruppe (112) an dem Fahrgestell aufgehängt ist, wobei das Raupenfahrzeug **dadurch gekennzeichnet ist, dass** die erste Aufhängungsbaugruppe (110) Folgendes umfasst:
- wenigstens einen Verbindungsarm (116, 118), wobei das eine Ende des Verbindungsarms drehbar an dem Fahrgestell (104) angebracht ist und das andere Ende drehbar an einer der Raupenbaugruppen (102) angebracht ist,
und die zweite Aufhängungsbaugruppe (112) Folgendes umfasst:
- wenigstens zwei Verbindungsarme (117, 119), wobei das eine Ende jedes Verbindungsarms drehbar an dem Fahrgestell (104) angebracht ist und das andere Ende drehbar an der einen Raupenbaugruppe (102) angebracht ist, und
- wenigstens einen einstellbaren Stellantrieb (121), der das eine Ende drehbar an dem Fahrgestell (104) angebracht hat und das andere Ende drehbar an der einen Raupenbaugruppe (102) angebracht hat derart, dass die Höhe der einen Raupenbaugruppe im Verhältnis zu dem Fahrgestell sowohl an der ersten als auch an der zweiten Aufhängungsbaugruppe durch das Einstellen der Länge des einstellbaren Stellantriebs eingestellt werden kann.

2. Raupenfahrzeug (100) nach Anspruch 1, wobei jede Aufhängungsbaugruppe (110, 112) Folgendes umfasst:
- wenigstens zwei Verbindungsarme (116, 117, 118, 119), wobei das eine Ende jedes Verbindungsarms drehbar an dem Fahrgestell (104) angebracht ist und das andere Ende drehbar an der einen Raupenbaugruppe (102) angebracht ist, und
- wenigstens einen einstellbaren Stellantrieb (120, 121), der das eine Ende drehbar an dem Fahrgestell (104) angebracht hat und das andere Ende drehbar an der einen Raupenbaugruppe (102, 103) angebracht hat derart, dass die Höhe der einen Raupenbaugruppe im Verhältnis zu dem Fahrgestell durch das Einstellen der Länge des einstellbaren Stellantriebs eingestellt werden kann.

3. Raupenfahrzeug nach Anspruch 1 oder 2, wobei wenigstens eine der Raupenbaugruppen (102, 103) einen Raupenträger und wenigstens zwei Raupenstützelemente (108), die in einem festgelegten Abstand entfernt von dem Träger angeordnet sind, umfasst und wobei die Raupenstützelemente mit den Aufhängungsbaugruppen (110, 112), welche die Raupenbaugruppe aufhängen, verbunden sind.

4. Raupenfahrzeug nach einem der vorhergehenden Ansprüche, wobei die wenigstens zwei Verbindungsarme (116, 118), (117, 119) wenigstens einer der Aufhängungsbaugruppen (110, 112) im Wesentlichen parallel zueinander in einem gegenseitigen Abstand angeordnet sind.

5. Raupenfahrzeug nach einem der vorhergehenden Ansprüche, wobei die wenigstens zwei Verbindungsarme (116, 118), (117, 119) wenigstens einer der Aufhängungsbaugruppen (110, 112) nicht parallel zueinander angeordnet sind.

6. Raupenfahrzeug nach einem der vorhergehenden Ansprüche, wobei die Stellantriebe (120, 121) der Aufhängungsbaugruppen (110, 112) einzeln einstellbar sind.

7. Raupenfahrzeug nach einem der vorhergehenden Ansprüche, wobei die wenigstens zwei Verbindungsarme (116, 118), (117, 119) wenigstens einer der Aufhängungsbaugruppen (110, 112) derart angebracht sind, dass das eine Ende des ersten Verbindungsarmes an einer ersten Fahrgestellposition an dem Fahrgestell (104) angebracht ist und das eine Ende des zweiten Verbindungsarmes an einer zweiten, dem Boden näheren, Fahrgestellposition an dem Fahrgestell (104) angebracht ist, und derart, dass das andere Ende des ersten Verbindungsarmes an einer ersten Raupenposition an der Raupenbaugruppe (102, 103) angebracht ist und das andere Ende des zweiten Verbindungsarmes an einer zweiten, dem Boden näheren, Raupenposition an der Raupenbaugruppe (102, 103) angebracht ist.

8. Raupenfahrzeug nach einem der vorhergehenden Ansprüche, wobei die Enden jedes der Verbindungsarme (116, 117, 118, 119) und jedes Ende des einstellbaren Stellantriebs (120, 121) wenigstens einer der Aufhängungsbaugruppen (110, 112) ein Stangenendlager umfassen.

9. Raupenfahrzeug nach einem der vorhergehenden Ansprüche, wobei wenigstens einer der Verbindungsarme (116, 117, 118, 119) wenigstens einer der Aufhängungsbaugruppen einen Riegel umfasst.

10. Raupenfahrzeug nach einem der vorhergehenden Ansprüche, wobei wenigstens einer der Verbindungsarme (116, 117, 118, 119) wenigstens einer der Aufhängungsbaugruppen ein Längeneinstellungselement, wie beispielsweise einen Stellantrieb, einen Hydraulikzylinder oder einen Pneumatikzylinder, umfasst derart, dass der Winkel der einen Aufhängungsbaugruppe im Verhältnis zu dem Fahrgestell durch das Einstellen der Länge des Verbindungsarmes eingestellt werden kann.

11. Raupenfahrzeug nach einem der vorhergehenden Ansprüche, wobei wenigstens eine der Raupenbaugruppen (102, 103) ferner durch wenigstens eine Drehstabfeder (114) mit dem Fahrgestell (104) verbunden ist, wobei das eine Ende der Drehstabfeder an dem Fahrgestell angebracht ist und das andere Ende der Drehstabfeder an der Raupenbaugruppe angebracht ist derart, dass Zugund Druckkräfte wenigstens teilweise in der Bewegungsrichtung des Fahrzeugs zwischen dem Fahrgestell und der Raupenbaugruppe übertragen werden können.

12. Raupenfahrzeug nach Anspruch 11, wobei die an einer der Raupenbaugruppen angebrachte wenigstens eine Drehstabfeder (114) zwischen den wenigstens zwei Aufhängungsbaugruppen, welche die eine Raupenbaugruppe aufhängen, angebracht ist.

13. Raupenfahrzeug nach Anspruch 12, wobei jedes Ende der Drehstabfeder (114) ein Stangenendlager umfasst.

14. Raupenfahrzeug nach einem der vorhergehenden Ansprüche, wobei wenigstens eine der Raupenbaugruppen durch die wenigstens zwei Aufhängungsbaugruppen, die an jedem Ende der Raupenbaugruppe angebracht sind, aufgehängt wird.

15. Raupenfahrzeug nach einem der vorhergehenden Ansprüche, wobei wenigstens eine der Aufhängungsbaugruppen ferner wenigstens ein Kissen umfasst.

## Revendications

1. Véhicule à chenilles (100) comprenant un châssis (104) et au moins deux ensembles de chenilles (102,103), où chaque ensemble de chenille est suspendu audit châssis par un premier ensemble de suspension (110) et un second ensemble de suspension (112), le véhicule à chenilles étant **caractérisé par** ledit premier ensemble de suspension (110) comprenant :
- au moins un bras de raccordement (116,118), où une extrémité dudit bras de raccordement est montée de manière tournante sur ledit châssis (104) et l'autre extrémité est montée de manière tournante sur un desdits ensembles de chenille (102) ; et ledit second ensemble de suspension (112) comprenant
- au moins deux bras de raccordement (117,119), où une extrémité de chaque bras de raccordement est montée de manière tournante sur ledit châssis (104) et l'autre extrémité est montée de manière tournante sur un ensemble de chenille (102), et
- au moins un actionneur ajustable (121) ayant une extrémité montée de manière tournante sur ledit châssis (104) et l'autre extrémité montée de manière tournante sur un dit ensemble de chenille (102), de sorte que la hauteur d'un ensemble de chenille par rapport au châssis puisse être ajustée au niveau d'à la fois le premier et le second ensemble de suspension en ajustant la longueur de l'actionneur ajustable.

2. Véhicule à chenilles (100) selon la revendication 1, dans lequel chaque ensemble de suspension (110,112) comprend :
- au moins deux bras de raccordement (116,117,118,119), où une extrémité de chaque bras de raccordement est montée de manière tournante sur ledit châssis (104) et l'autre extrémité est montée de manière tournante sur un desdits ensembles de chenille (102,103), et
- au moins un actionneur ajustable (120,121) ayant une extrémité montée de manière tournante sur ledit châssis (104) et l'autre extrémité montée de manière tournante sur un ensemble de chenille (102,103), de sorte que la hauteur dudit ensemble de chenille par rapport au châssis puisse être ajustée en ajustant la longueur de l'actionneur ajustable.

3. Véhicule à chenilles selon les revendications 1 ou 2, où au moins un des ensembles de chenille (102,103) comprend une poutrelle de chenille et au moins deux éléments de support de chenille (108) positionnés à une distance fixe l'un de l'autre sur ladite poutrelle, e où les éléments de support de chenille sont raccordés aux ensembles de suspension (110,112) suspendant ledit ensemble de chenille.

4. Véhicule à chenilles selon une quelconque des revendications précédentes, où lesdits au moins deux bras de raccordement (116,118), (117,119) d'au moins un desdits ensembles de suspension (110,112) sont montés essentiellement parallèlement l'un à l'autre à une distance mutuelle.

5. Véhicule à chenilles selon une quelconque des revendications précédentes, où lesdits au moins deux bras de raccordement (116,118), (117,119) d'au moins un desdits ensembles de suspension (110,112) sont montés non parallèlement l'un à l'autre.

6. Véhicule à chenilles selon une quelconque des revendications précédentes, où les actionneurs (120,121) des ensembles de suspension (110,112) sont ajustables individuellement.

7. Véhicule à chenilles selon une quelconque des revendications précédentes, où au moins deux bras de raccordement (116,118), (117,119) d'au moins un desdits ensembles de suspension (110,112) sont montés de sorte qu'une extrémité du premier bras de raccordement soit montée sur le châssis (104) à une première position du châssis, et une extrémité du second bras de raccordement est montée sur le châssis (104) à une seconde position du châssis plus proche du sol, et de sorte que l'autre extrémité du premier bras de raccordement soit montée sur l'ensemble de chenille (102,103) à une première position de chenille, et l'autre extrémité du second bras de raccordement est montée sur l'ensemble de chenille (102,103) à une seconde position de chenille plus proche du sol.

8. Véhicule à chenilles selon une quelconque des revendications précédentes, où les extrémités de chaque bras de raccordement (116,117,118,119) et chaque extrémité dudit actionneur ajustable (120,121) d'au moins un desdits ensembles de suspension (110,112) comprennent un palier d'extrémité de tige.

9. Véhicule à chenilles selon une quelconque des revendications précédentes, où au moins un desdits bras de raccordement (116,117,118,119) d'au moins un desdits ensembles de suspension comprend une barre.

10. Véhicule à chenilles selon une quelconque des revendications précédentes, où au moins un desdits bras de raccordement (116,117,118,119) d'au moins un desdits ensemble de suspension comprend un élément ajustant la longueur comme un actionneur, un vérin hydraulique ou un vérin pneumatique, de sorte que l'angle d'un ensemble de chenille par rapport au châssis puisse être ajusté en ajustant la longueur du bras de raccordement.

11. Véhicule à chenilles selon une quelconque des revendications précédentes, où au moins un desdits ensembles de chenille (102,103) est en outre raccordé audit châssis (104) par au moins une barre de torsion (114), où une extrémité de ladite barre de torsion est montée sur ledit châssis et l'autre extrémité de ladite barre de torsion est montée sur ledit ensemble de chenille, de sorte que les forces de tension et compression puissent être transférées entre ledit châssis et ledit ensemble de chenille au moins partiellement dans la direction de mouvement du véhicule.

12. Véhicule à chenilles selon la revendication 11, dans lequel ladite au moins une barre de torsion (114) montée sur un desdits ensembles de chenille est montée au moins deux ensembles de suspension suspendant un ensemble de chenille.

13. Véhicule à chenilles selon la revendication 12, où chaque extrémité de ladite barre de torsion (114) comprend un palier d'extrémité de tige.

14. Véhicule à chenilles selon une quelconque des revendications précédentes, où au moins un desdits ensembles de chenille est suspendu par lesdits au moins deux ensembles de suspension monté à chaque extrémité dudit ensemble de chenille.

15. Véhicule à chenilles selon une quelconque des revendications précédentes, où au moins un des ensembles de suspension comprend au moins un coussinet.
